# EUROPEAN PATENT SPECIFICATION

(11) **EP 2 045 179 B1**
(45) Date of publication and mention of the grant of the patent: **21.04.2010**
(21) Application number: 08017229.9
(22) Date of filing: 30.09.2008
(51) Int. Cl.: B62J 29/00, B62K 5/00, B60R 1/12

(54) **Small-sized motorized vehicle**
Kleines Kraftfahrzeug
Véhicule motorisé de petite taille

(30) Priority: 04.10.2007 JP 2007260733
(43) Date of publication of application: 08.04.2009
(73) Proprietor: HONDA MOTOR CO., LTD., Tokyo 107-8556 (JP)
(72) Inventor: Azuma, Koichi, Wako-shi Saitama, 351-0193 (JP); Yaguchi, Tadahiro, Wako-shi Saitama, 351-0193 (JP); Fukuzumi, Yasumi, Wako-shi Saitama, 351-0193 (JP)
(74) Representative: Prechtel, Jörg

(56) References cited:
- JP-A- 60 107 466
- JP-A- 62 094 491
- US-A- 4 906 086
- US-A1- 2003 155 191
- US-A1- 2007 091 625

## Description

The present invention relates to a motorized wheelchair that is capable of traveling on sidewalks and being used as a transportation means for elderly or other persons.

In general, a motorized wheelchair is equipped with mirrors attached to a steering handle in order for a vehicle occupant to look sideward and backward. Further, the steering handle has a loop shape to protect hands that grip the steering handle against external obstacles.

JP-A 2007-083958 and JP-A 2007-137191 bolt disclose small-sized motorized vehicles (wheel chairs) with all the features of the preamble of claim 1, including mirror attaching structures and handle grips associated therewith.

In the small-sized motorized vehicle disclosed in JP-A 2007-083958, a bracket is attached to a loop-shaped steering handle. Mirror stays are attached to the bracket, and a rear-view mirror is then attached to the tip of each of the mirror stays.

In the small-sized motorized vehicle disclosed in JP-A 2007-137191, rear-view mirrors are attached to a loop-shaped steering handle via mirror stays, and grips that a vehicle occupant (driver) holds are attached to the steering handle. Each of the grips has a recess in which the base of the thumb of the vehicle occupant fits.

However, in the small-sized motorized vehicles disclosed in JP-A 2007-083958 and JP-A 2007-137191, the rear-view mirrors are fixed to the steering handle and integrated therewith. For example, when the vehicle is moving backward and the steering handle is steered, images reflected off the rear-view mirrors do not relate to objects present in the traveling direction. It is therefore difficult for the vehicle occupant to look behind the vehicle.

In the small-sized motorized vehicles described above, a loop-shaped steering handle is generally employed to protect hands against external obstacles. If any other means can protect hands against external obstacles, it is not necessary to employ a loop-shaped steering handle, and the degree of freedom in designing a small-sized motorized vehicle conveniently increases.

Since the small-sized motorized vehicles described above are used by elderly or other people, and it may be difficult for them to twist their body to look backward during driving, it is extremely important for them to use rear-view mirrors to look behind the vehicle. Further, if the vehicle occupant looks only to the rear right or left side through the rear-view mirrors, the vehicle occupant may not notice an obstacle on the rear left or right side, where the vehicle occupant is not viewing, or an obstacle immediately behind the vehicle. It is therefore necessary to improve the convenience of rear-view mirrors.

An object of the present invention is to provide a motorized wheelchair in which the shape of a steering handle can be designed as desired and the convenience of rear-view mirrors can be improved.

An aspect of the invention is a motorized wheelchair including a steering shaft rotatably provided in a vehicle body; a steering handle attached to the steering shaft; handle grips that are attached to the steering handle and gripped by a vehicle occupant; and rear-view mirrors disposed in front of the handle grips and used to look behind the vehicle. The rear-view mirrors cover the entirety of the handle grips as viewed from the front of the vehicle.

Since the rear-view mirrors are positioned to cover the entire handle grips when the vehicle is viewed from the front, the rear-view mirrors can protect hands against external obstacles. Therefore, for example, it is not necessary to employ a loop-shaped steering handle, and the degree of freedom in designing the motorized wheelchair increases.

It is preferable that an upper portion of the steering shaft on the steering handle side is inclined backward with respect to the vehicle and pivotably attached to the vehicle body, and the rear-view mirrors are attached to a fixed portion on the vehicle body side.

Therefore, when the steering handle is steered, the handle grip that rotates outward approaches the corresponding rear-view mirror and moves above the rear-view mirror and inward with respect to the vehicle body, whereas the handle grip that rotates inward moves away from the corresponding rear-view mirror and moves under the rear-view mirror and inward with respect to the vehicle body. The hand of the vehicle occupant that grips the handle grip that rotates outward will move above the corresponding rear-view mirror and will not interfere therewith because the steering shaft to which the steering handle is attached is inclined backward, and the hand will not hit any obstacle because the hand rotates outward. Specifically, since the portion of the steering shaft on the steering handle side is inclined backward with respect to the vehicle body and pivotally attached to the vehicle body, and the rear-view mirrors are attached to a fixed portion on the vehicle body side, the hands of the vehicle occupant can be protected against obstacles when the vehicle is turning.

Since the rear-view mirrors are attached to a fixed portion on the vehicle body, the rear-view mirrors will not move integrally with the steering handle even when the vehicle is moving backward and the steering handle is steered. The vehicle occupant can therefore readily look behind the vehicle. As a result, the operability of the vehicle can be improved.

The motorized wheelchair further includes obstacle detecting means for detecting an obstacle behind the vehicle, the obstacle detecting means being provided in the vehicle body. The rear-view mirrors have a plurality of light emitters disposed in a substantially horizontal direction within a range visible to the vehicle occupant. When the vehicle is moving backward and the obstacle detecting means detects an obstacle behind the vehicle, the states of illumination of the light emitters are changed in accordance with the position of the obstacle.

The vehicle occupants of such motorized wheel chairs are mostly elderly or other people, and it may be difficult for some of them to twist their body backward during driving. It is extremely important for them to use rear-view mirrors to look behind the vehicle. When the vehicle is moving backward and the obstacle detecting means detects an obstacle behind the vehicle, the states of illumination of the light emitters are changed in accordance with the position of the obstacle, whereby the convenience of rear-view mirrors can be improved.

A preferred embodiment of the invention will be described below in detail with reference to the accompanying drawings, in which
FIG. 1 is a side view of a motorized wheel chair according to the present invention;
FIG. 2 is a plan view of the motorized wheel chair shown in FIG. 1;
FIG. 3 is a front view of the motorized wheel chair shown in FIG. 1;
FIG. 4 is a rear view of the motorized wheel chair shown in FIG. 1;
FIG. 5 is a plan view of a steering handle and rear-view mirrors of the motorized wheel chair;
FIGS. 6A and 6B show the positional relationship between handle grips and rear-view mirrors of the motorized wheel chair shown in FIG. 1;
FIGS. 7A and 7B show a state in which the steering handle of the sized motorized wheel chair is steered;
FIGS. 8A to 8D show the states of illumination of a plurality of position indicator lamps provided in the rear-view mirrors;
FIG. 9 is an electric block diagram of the motorized wheelchair shown in FIG. 1; and
FIG. 10 is a flowchart showing the operation of a controller shown in FIG. 9.

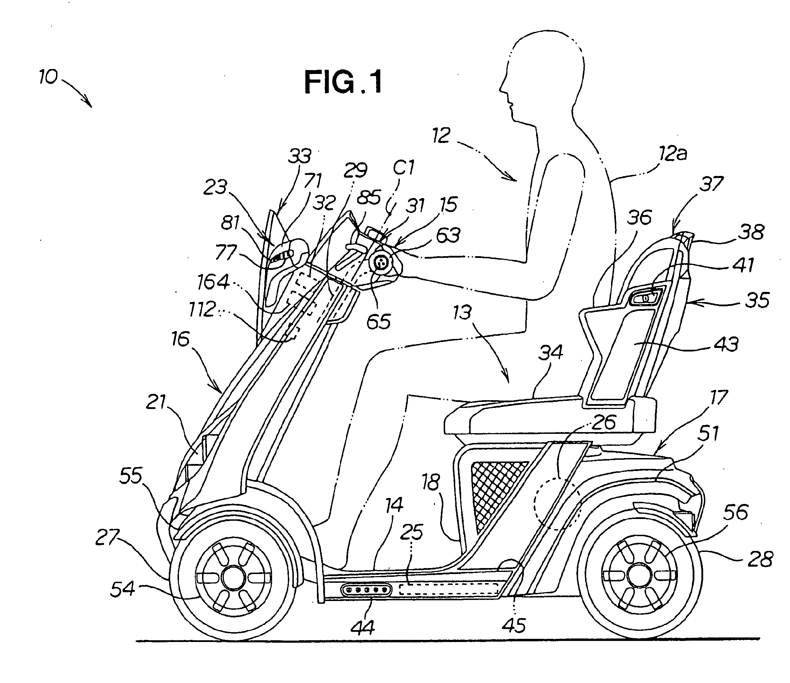

Referring to FIGS. 1 to 4, a motorized wheelchair 10 includes a seat 13 on which a vehicle occupant 12 is seated; a floor step 14 on which the feet of the vehicle occupant 12 are placed; a steering handle 15 by which the vehicle occupant 12 steers the vehicle; a front cowl 16 that covers a front portion of a vehicle body; a rear cowl 17 that covers a rear portion of the vehicle body; side cowls 18, 18 that are provided to the lateral underside of the seat 13 and that surround the portion under the seat 13 (only one of the side cowls is shown); headlights 21, 21 that are provided on the front side of the vehicle body and illuminate an area in front of the vehicle 10; left and right rear-view mirrors 23, 24 disposed above the front cowl 16 and used by the vehicle occupant 12 to look behind the vehicle; a battery 25 disposed in a lower portion of the floor step 14; an electric motor 26 that is disposed under the seat 13 and receives electric power from the battery 25; front wheels 27, 27 rotatably and steerably disposed in a front lower portion of the vehicle body; rear wheels 28, 28 rotatably disposed in a rear-lower portion of the vehicle body, and driven by the electric motor 26; a steering shaft 29 for steering the front wheels 27, 27, the upper end of the steering shaft 29 being attached to the steering handle 15 and the lower end of the steering shaft 29 being connected to the front wheels 27, 27; an operation panel 31 disposed in a central portion of the steering handle 15 and used to drive the vehicle; a navigation system 32 that is disposed in the front cowl 16 and uses a GPS (global positioning system)-based position detection capability; and a display 33 that is provided in an upper central portion of the front cowl 16 and displays driving information and navigation information.

Further, the motorized wheelchair 10 can travel only at 6 km/h (1.67 m/sec) at a maximum and is of a restricted vehicle body size; i.e., is smaller than 109 cm in height, 70 cm in width, and 120 cm in total length. Specifically, the motorized wheelchair 10 is used by elderly or other people as transportation means. Therefore, the vehicle 10, when crossing a road, cannot by itself readily avoid an approaching nearby vehicle. It is therefore very important to improve the visibility of the vehicle 10.

The seat 13 is rotatably attached to the vehicle body to make it easier for the vehicle occupant to step on and off the vehicle. The seat 13 includes a seat cushion 34 that supports the waist of the vehicle occupant 12 and a seatback 35 that supports the back 12a of the vehicle occupant 12.

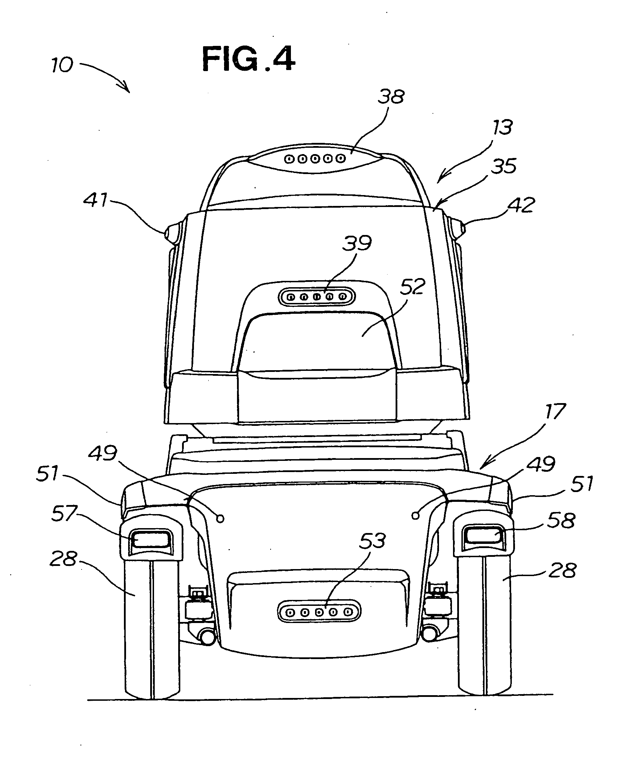

The seatback 35 includes stays 36, 36 that extend forward from the left and right sides and support the ribs of the vehicle occupant 12; illuminating means 37 that is provided at the front upper end of the seatback 35 and illuminates the back 12a of the vehicle occupant 12; a tail light 38 that is provided at the upper rear end of the seatback 35 and undergoes a change in the state of illumination when the vehicle turns or crosses a road; a seat rear lamp 39 (FIG. 4) that is provided on the rear of the seatback 35 and that illuminates when the headlights 21, 21 are illuminated; left and right side turn indicators 41, 42 provided on the sides of the seatback 35; and side reflectors 43, 43 that are provided on the left and right sides of the seatback 35 and reflect light from nearby vehicles and other objects (only one of the side reflectors is shown).

The tail light 38 is alerting means for informing pedestrians and nearby vehicles that the vehicle 10 is turning or crossing a road.

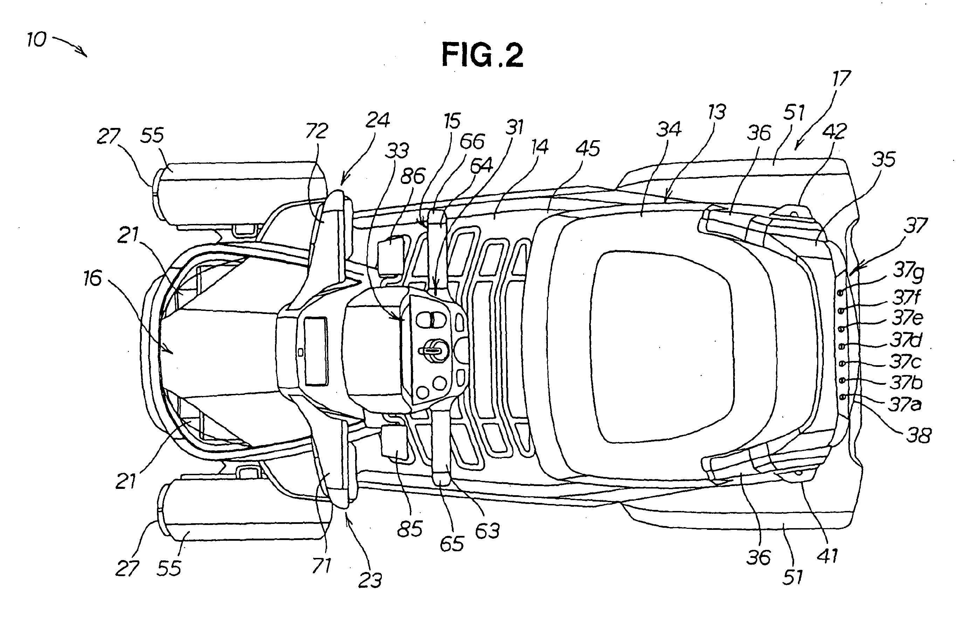

As shown in FIG. 2, the illuminating means 37 includes a plurality of light emitters 37a to 37g, and the light emitters 37a to 37g are disposed for illuminating the entire back 12a of the vehicle occupant 12.

The floor step 14 includes side lamps 44, 44 that are disposed on the left and right sides and that are illuminated concurrently when the headlights 21, 21 are illuminated (only one of the side lamps is shown) and a baggage space 45 provided under the seat 13 and surrounded by the side cowls 18, 18.

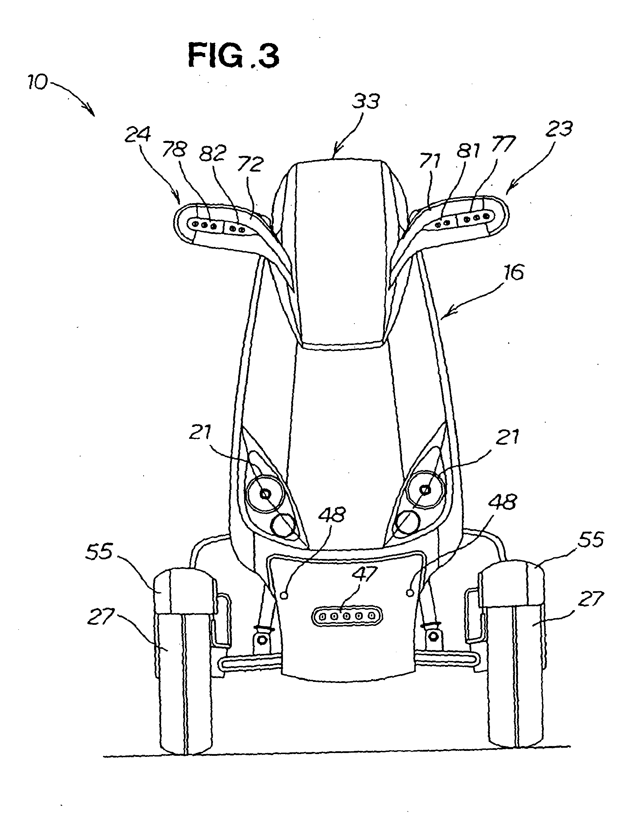

As shown in FIG. 3, the front cowl 16 includes a front lamp 47 that is illuminated concurrently when the headlights 21, 21 are illuminated and front sonar units 48, 48 that detect parked vehicles in front of the vehicle 10 and other obstacles. The front sonar units 48, 48 are obstacle detecting means for detecting obstacles that are in front of the vehicle and invisible to the vehicle occupant.

As shown in FIG. 4, the rear cowl 17 includes a rear lamp 53 that illuminates concurrently when the headlights 21, 21 are illuminated; rear sonar units 49, 49 that detect obstacles behind the vehicle; rear fenders 51, 51 that cover the portions above the rear wheels 28, 28; a rear reflector 52 that is provided behind the rear fenders 51, 51 and receives and reflects light from nearby vehicles and other objects; and left and right rear turn indicators 57, 58. The rear sonar units 49, 49 are obstacle detecting means for detecting obstacles behind the vehicle.

The front wheels 27, 27 are puncture-resistant tires, and include wheel caps 54, 54 with reflective labels that make the vehicle more visible to pedestrians and nearby vehicles (only one of the wheel caps is shown) and front fenders 55, 55 that can rotate when the steering handle 15 is steered to rotate the front wheels 27, 27.

Since the front fenders 55, 55 rotate along with the front wheels 27, 27, the vehicle occupant 12 can confirm the steering angle of the front wheels 27, 27 while the vehicle occupant 12 remains seated. The vehicle occupant 12 can thus check the motion of the vehicle when backing up the vehicle.

The rear wheels 28, 28 include wheel caps 56, 56 with reflective labels that make the vehicle more visible to pedestrians and nearby vehicles, and the rear fenders 51, 51 formed integrally with the rear cowl 17 cover the portions above the rear wheels 28, 28. The rear wheels 28, 28 are also puncture-resistant tires.

The steering shaft 29 is pivotally attached to the vehicle body with the portion of the steering shaft 29 on the steering handle 15 side inclined backward with respect to the vehicle body. Specifically, the center line C1 of the steering shaft 29 on the steering handle 15 side (upper end) is inclined backward with respect to the vehicle.

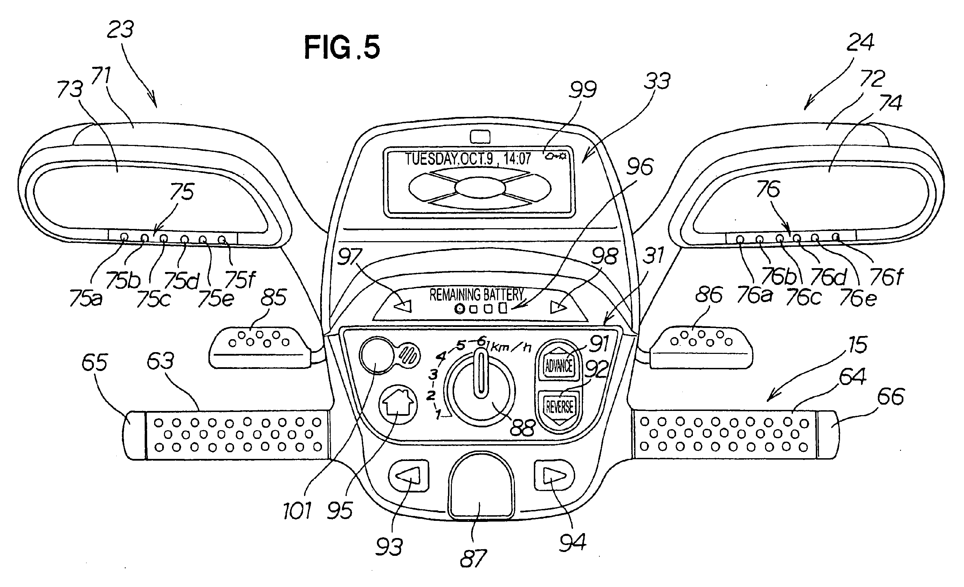

FIG. 5 shows the steering handle and the rear-view mirrors of the motorized wheelchair shown in FIG. 1.

The steering handle 15 is a substantially horizontal bar-shaped handle, and includes left and right handle grips 63, 64 provided at the left and right sides of the bar-shaped handle, and handle-tip lights 65, 66 that are provided at the ends of the handle grips 63, 64 and undergo a change in their state of illumination when the vehicle is turning or crossing a road.

The handle-tip lights 65, 66 are alerting means for informing pedestrians and nearby vehicles that the vehicle 10 is turning or crossing a road.

The left and right rear-view mirrors 23, 24 are positioned in front of the handle grips 63, 64, as shown in FIGS. 3 and 5. The left and right rear-view mirrors 23, 24 are sized to substantially cover the entire left and right handle grips 63, 64 when the vehicle is viewed from the front.

The left and right rear-view mirrors 23, 24 include left and right mirror housings 71, 72; left and right mirrors 73, 74 that are provided in the left and right mirror housings 71, 72 and show the situation behind the vehicle; left and right position indicator lamps 75, 76 having a plurality of light emitters 75a to 75f, 76a to 76f disposed substantially in the horizontal direction in lower portions of the left and right mirror housings 71, 72, the left and right position indicator lamps 75, 76 indicating the position of an obstacle behind the vehicle; left and right front turn indicators 77, 78 (FIG. 3) formed in the front surfaces of the left and right mirror housings 71, 72; and left and right mirror-housing lights 81, 82 (FIG. 3) that are formed in the front surfaces of the left and right mirror housings 71, 72 and undergo a change in their state of illumination when the vehicle is turning or crossing a road.

The left and right position indicator lamps 75, 76 are configured in such a way that when the vehicle is moving backward and the rear sonar units 49, 49 detect an obstacle behind the vehicle, the light emitters 75a to 75f, 76a to 76f undergo a change in their state of illumination in accordance with the position of the obstacle.

The left and right mirror-housing lights 81, 82 are alerting means for informing pedestrians and nearby vehicles that the vehicle 10 is turning or crossing a road.

The operation panel 31 includes left and right travelling levers 85, 86 provided in front of the handle grips 63, 64; a main switch 87 for turning on the battery 25; a traveling speed setting knob 88 that for setting the traveling speed; an advancing button 91 and a reversing button 92 for switching the traveling mode between advancing and reversing; left and right turn indicator buttons 93, 94 for turning on the left and right front turn indicators 77, 78, the left and right side turn indicators 41, 42, and the left and right rear turn indicators 57, 58; a navigation button 95 for activating and deactivating the navigation system 32; and an emergency call button 101 used to request assistance in the event of an emergency.

The left and right travelling levers 85, 86, when either of which is operated, perform the same function and reduce the speed of the vehicle when firmly gripped.

The traveling speed setting knob 88 can set the speed from 1 to 6 km/h in a stepless manner. At a speed of 4 km/h or higher, steering the steering handle 15 causes automatic deceleration.

The display 33 includes a remaining battery display 96 for indicating the level of charge left in the battery 25; left and right turn indicator displays 97, 98 that display whether the left and right front turn indicators 77, 78, the left and right side turn indicators 41, 42, and the left and right rear turn indicators 57, 58 are illuminated or blinking; and a liquid crystal panel 99 that displays driving information and navigation information.

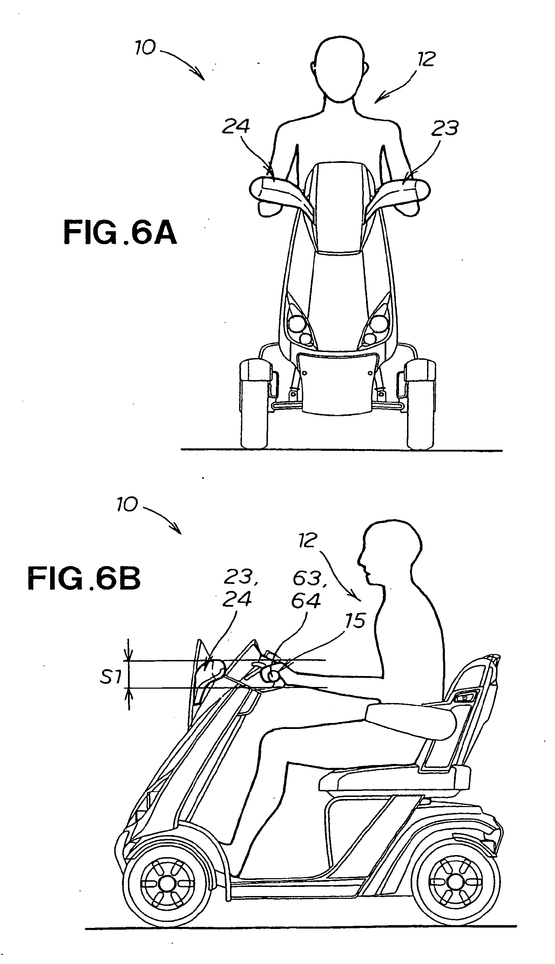

FIGS. 6A and 6B show the positional relationship between the handle grips and the rear-view mirrors of the small-sized motorized vehicle 10.

In the motorized wheelchair 10 shown in FIG. 6A, the steering shaft 29 (FIG. 1) is rotatably provided to the vehicle body, and the steering handle 15 is attached to the steering shaft 29. The steering handle 15 has the left and right handle grips 63, 64 that the vehicle occupant 12 grips. The left and right rear-view mirrors 23, 24 used to look rearward are disposed in front of the handle grips 63, 64.

In FIG. 6B, the left and right rear-view mirrors 23, 24 are positioned to cover the entire handle grips 63, 64 (a range S1) when the vehicle is viewed from the front. That is, the rear-view mirrors 23, 24 are disposed substantially in front of the hands of the vehicle occupant 12 when the vehicle is moving straight ahead, and the left and right rear-view mirrors 23, 24 are set to such a size that they substantially cover the hands gripping the steering handle 15. As a result, the rear-view mirrors can protect the hands against external obstacles; e.g., a loop-shaped steering handle does not need to be provided, and it is possible to increase the degree of freedom in designing the motorized wheelchair 10 including its external appearance.

Using the rear-view mirrors 23, 24 not only for their original purpose but also for protecting the hands of the vehicle occupant 12 allows the number of parts around the steering handle 15 to be reduced.

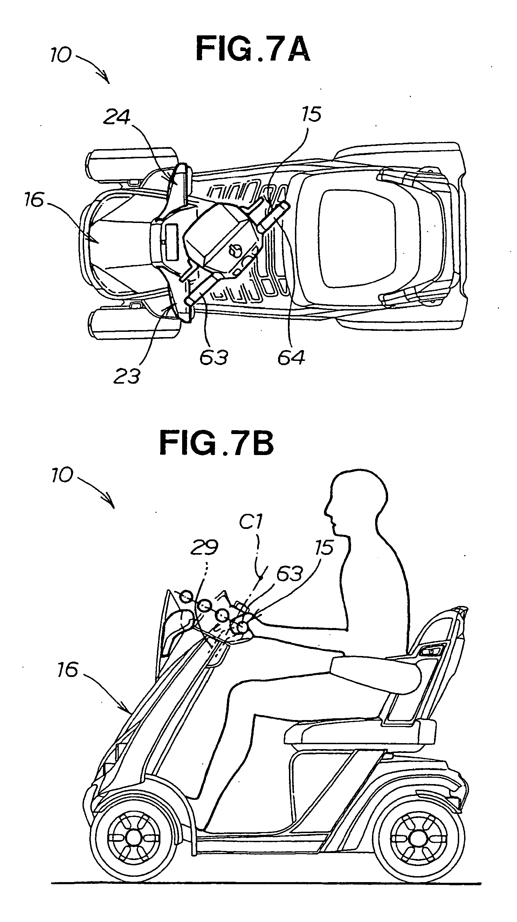

FIGS. 7A and 7B show a state in which the steering handle 15 of the motorized wheelchair is steered.

In FIGS. 7A and 7B, the steering shaft 29 is pivotally attached to the vehicle body with the portion of the steering shaft 29 on the steering handle 15 side (upper end) inclined backward with respect to the vehicle. The rear-view mirrors 23, 24 are attached to the front cowl 16, which is a fixed portion on the vehicle body side. That is, the hands will not hit the rear-view mirrors 23, 24 even when the steering handle 15 is turned and the hands of the vehicle occupant 12 move forward, because the steering shaft 29 is inclined backward and the steering handle 15 moves upward.

Therefore, as shown in FIG. 7B, when the steering handle 15 is steered, the (left) handle grip 63 that rotates outward approaches the left rear-view mirror 23 and moves above the left rear-view mirror 23 and inward with respect to the vehicle body. As shown in FIG. 7A, the handle grip 64 that rotates inward moves away from the right rear-view mirror 24 and moves under the right rear-view mirror 24 and inward with respect to the vehicle body. The hand of the vehicle occupant 12 that grips the handle grip 63 that rotates outward and the steering handle 15 will not interfere with the left rear-view mirror 23 because the steering shaft 29 is inclined backward, and the hand will not hit any obstacle because the hand rotates outward. Further, the hand of the vehicle occupant that grips the handle grip 64 that rotates inward will not interfere with the right rear-view mirror 24 or hit any obstacle because the hand moves inward with respect to the vehicle body.

That is, since the portion of the steering shaft 29 on the steering handle 15 side is inclined backward with respect to the vehicle body and pivotally attached to the vehicle body, and the rear-view mirrors 23, 24 are attached to a fixed portion (the front cowl 16, for example) on the vehicle body side, the hands of the vehicle occupant 12 can be protected against obstacles when the vehicle is turning.

Since the rear-view mirrors 23, 24 are attached to a fixed portion on the vehicle body side, the rear-view mirrors 23, 24 will not move integrally with the steering handle even when the vehicle is moving backward and the steering handle 15 is steered. The vehicle occupant can therefore readily look behind the vehicle. As a result, the operability of the vehicle can be improved.

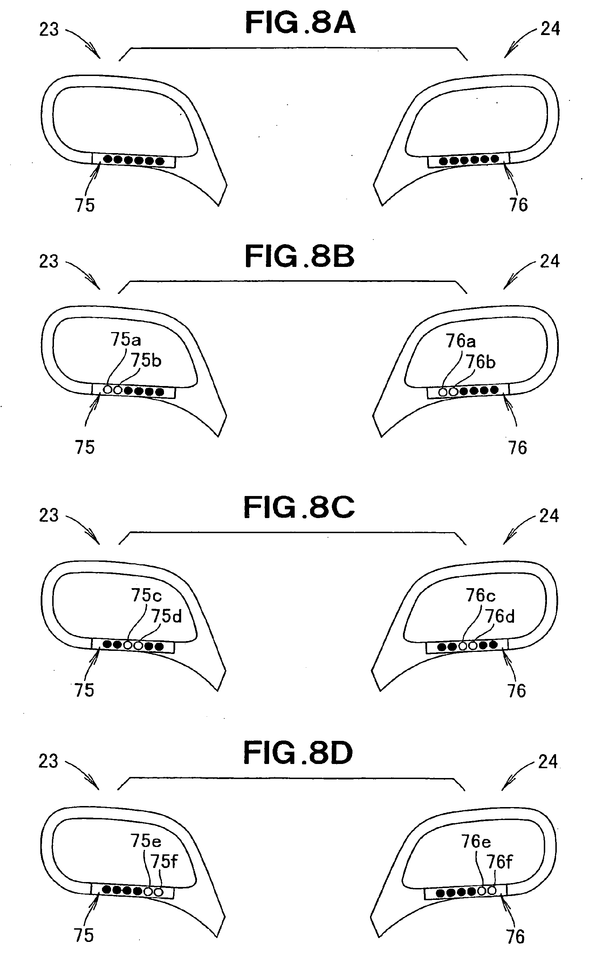

FIGS. 8A to 8D show the position indicator lamps 75, 76 provided in the rear-view mirrors 23, 24 of the motorized wheelchair.

In FIG. 8A, when the vehicle is moving backward and the obstacle detecting means 49, 49 (FIG. 4) detects no obstacle behind the vehicle, the position indicator lamps 75, 76 are not illuminated.

The plurality of light emitters 75a to 75f in the position indicator lamp 75 are illuminated in the same manner as the plurality of light emitters 76a to 76f in the position indicator lamp 76 in order to inform the vehicle occupant of the location of an obstacle behind the vehicle, irrespective of whether the vehicle occupant is looking at the left or right rear-view mirror 23, 24.

In FIG. 8B, when the vehicle is moving backward and the obstacle detecting means 49, 49 (FIG. 4) detects an obstacle behind the vehicle, the left-side light emitters 75a, 75b, 76a, 76b of the plurality of light emitters 75a to 75f, 76a to 76f in the position indicator lamps 75, 76 will illuminate because the obstacle is on the left side behind the vehicle.

In FIG. 8C, when the vehicle is moving backward and the obstacle detecting means 49, 49 (FIG. 4) detects an obstacle behind the vehicle, the central light emitters 75c, 75d, 76c, 76d of the plurality of light emitters 75a to 75f, 76a to 76f in the position indicator lamps 75, 76 will illuminate because the obstacle is in a central area behind the vehicle.

In FIG. 8D, when the vehicle is moving backward and the obstacle detecting means 49, 49 (FIG. 4) detects an obstacle behind the vehicle, the right-side light emitters 75e, 75f, 76e, 76f of the plurality of light emitters 75a to 75f, 76a to 76f in the position indicator lamps 75, 76 will illuminate because the obstacle is on the right side behind the vehicle.

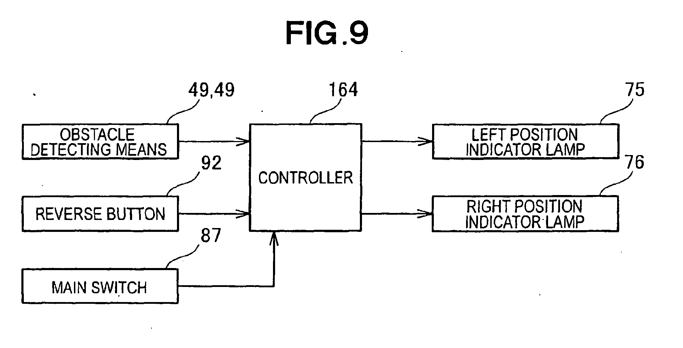

FIG. 9 is an electric block diagram of the motorized wheelchair.

As shown in FIG. 9, in the motorized wheelchair 10 (FIG. 1), the state of the main switch 87, information obtained from the obstacle detecting means 49, 49 that detect an obstacle behind the vehicle, and information on the reversing button 92 that sets the traveling mode of the vehicle to reversing are inputted to a controller 164.

When the obstacle detecting means 49, 49 detect an obstacle behind the vehicle, the controller 164 turns on the whichever of the plurality of light emitters 75a to 75f, 76a to 76f in the left and right position indicator lamps 75, 76 that are relevant to the position of the obstacle, and informs the vehicle occupant 12 of the presence of the obstacle and an approximate position of the obstacle.

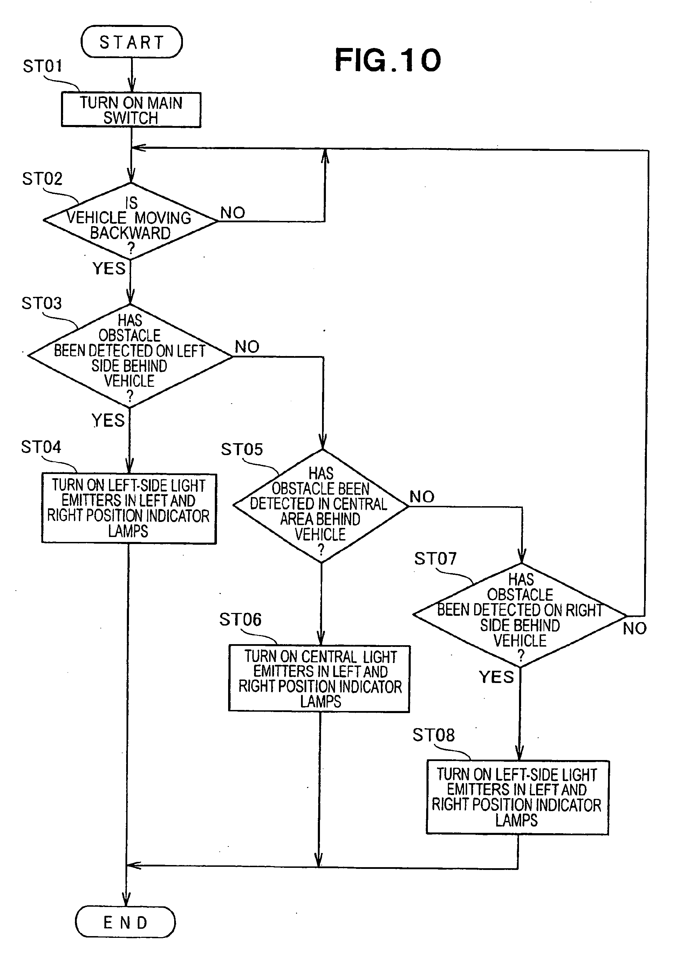

The operation of the controller 164 shown in FIG. 9 will be described based on the flowchart shown in FIG. 10 with reference to FIGS. 4, 5, and 8.

Step (hereinafter abbreviated to ST) 01: Turn on the main switch 87.

ST02: Determine whether or not the vehicle is moving backward based on the information on the reversing button 92. If the decision is YES, the control proceeds to ST03. If the decision is NO, the step ST02 is repeated.

ST03: Determine whether or not an obstacle has been detected on the left side behind the vehicle based on the information detected by the obstacle detecting means 49, 49. If the decision is YES, the control proceeds to ST04. If the decision is NO, the control proceeds to ST05.

ST04: Turn on the left-side light emitters 75a, 75b, 76a, 76b of the plurality of light emitters 75a to 75f, 76a to 76f in the position indicator lamps 75, 76.

ST05: Determine whether or not an obstacle has been detected in a central area behind the vehicle based on the information detected by the obstacle detecting means 49, 49. If the decision is YES, the control proceeds to ST06. If the decision is NO, the control proceeds to ST07.

ST06: Turn on the central light emitters 75c, 75d, 76c, 76d of the plurality of light emitters 75a to 75f, 76a to 76f in the position indicator lamps 75, 76.

ST07: Determine whether or not an obstacle has been detected on the right side behind the vehicle based on the information detected by the obstacle detecting means 49, 49. If the decision is YES, the control proceeds to ST08. If the decision is NO, the control returns to ST02.

ST08: Turn on the right-side light emitters 75e, 75f, 76e, 76f of the plurality of light emitters 75a to 75f, 76a to 76f in the position indicator lamps 75, 76.

As shown in FIGS. 4 and 5, in the motorized wheelchair 10, the vehicle body is equipped with such as the rear sonar units 49, 49 or other obstacle detecting means for detecting an obstacle behind the vehicle. Further, a plurality of light emitters 75a to 75f, 76a to 76f are disposed in the rear-view mirrors 23, 24 in a substantially horizontal direction within a range visible to the vehicle occupant 12. When the vehicle is moving backward and the obstacle detecting means 49, 49 detect an obstacle behind the vehicle, the states of illumination of the light emitters 75a to 75f, 76a to 76f are changed in accordance with the position of the obstacle.

The vehicle occupant 12 (FIG. 1) of such a motorized wheelchair 10 will mostly be an elderly or other person, and it may be difficult for some of them to twist their body backward during driving. It is extremely important for them to use rear-view mirrors 23, 24 to look behind the vehicle. When the vehicle is moving backward and the obstacle detecting means 49, 49 detect an obstacle behind the vehicle, the states of illumination of the light emitters 75a to 75f, 76a to 76f are changed in accordance with the position of the obstacle, whereby the convenience of rear-view mirrors 23, 24 can be improved.

Specifically, issuing an alarm by using the plurality of light emitters 75a to 75f, 76a to 76f prevents a collision with an obstacle that the vehicle occupant is not viewing but is shown in one of the rear-view mirrors 23, 24 or an obstacle in a blind spot invisible to the vehicle occupant.

The same lighting display is shown on both the left and right rear-view mirrors 23, 24 because the vehicle occupant 12 will mostly be an elderly or other person. That is, the vehicle occupant can visualize the situation behind the vehicle by viewing one of the rear-view mirrors 23, 24.

The motorized wheelchair of the present embodiment has been described with reference to a case where the rear-view mirrors 23, 24 are attached to the front cowl 16, which is a fixed portion on the vehicle body, as shown in FIG. 1, but the rear-view mirrors 23, 24 are not necessarily attached to the front cowl 16. The rear-view mirrors 23, 24 may be attached to any other portion as long as it is a fixed portion on the vehicle body, for example, a portion on the vehicle body frame.

The motorized wheelchair of the present embodiment has been described with reference to a case where the position indicator lamps 75, 76 in the rear-view mirrors 23, 24 are provided in lower portions of the mirror housings 71, 72 and relevant portions of the position indicator lamps are illuminated in accordance with the position of a detected obstacle, as shown in FIG. 5, but the states of illumination of the position indicator lamps are not limited thereto. For example, all the light emitters are first illuminated, and the color of relevant light emitters that correspond to the position of the detected obstacle may be changed, or the state of illumination of relevant light emitters that correspond to the position of the detected obstacle may be changed to a blinking mode.

Further, multiple sets of different colored LEDs (light emitting diodes) are disposed in the horizontal direction in lower or upper frames of the rear-view mirrors, and right-side red LEDs are illuminated, whereas central or left-side blue or green LEDs are illuminated when an obstacle is present on the right side. Moreover, the lighting states of the relevant LEDs may be changed to a blinking mode when the obstacle becomes closer to the vehicle.

A motorized wheelchair equipped with rear-view mirrors disposed in front of handle grips. The rear-view mirrors are of a size allowing the entire handle grips to be substantially covered when the vehicle is viewed from the front.

## Claims

1. A motorized wheel chair comprising:
a steering shaft (29) rotatably provided in a wheel chair body;
a steering handle (15) attached to the steering shaft;
handle grips (63, 64) that are provided to the steering handle and gripped by a wheel chair occupant; and
rear-view mirrors (23, 24) disposed in front of the handle grips and used to look behind the wheel chair, **characterized in that** the rear-view mirrors have such a size that they cover the entirety of the handle grips as viewed from the front of the wheel chair, when the wheel chair is moving straight ahead, and **in that** it further comprises obstacle detecting means (49, 49) being provided in the wheel chair body for detecting an obstacle behind the wheel chair, and a controller (164) being connected to the obstacle detecting means,
wherein each rear-view mirror has a plurality of light emitters (75a to 75f, 76a to 76f) disposed in a substantially horizontal direction within a range visible to a wheel chair occupant, wherein the controller (164) is adapted,
to obtain information about backward moving of the wheel chair and about an obstacle being behind the wheel chair and being detected by the obstacle detecting means (49, 49), and
to turn on whichever of the plurality of light emitters (75a to 75f, 76a to 76f) that represent a left or central or right position of the obstacle behind the wheel chair,
wherein the lighting display shown by turned on light emitters is the same on both rear-view mirrors (23, 24).

2. The motorized wheel chair of claim 1, wherein an upper portion of the steering shaft on the steering handle side is inclined backward with respect to the wheel chair and is pivotally attached to the wheel chair body, and the rear-view mirrors are attached to a fixed portion on the wheel chair body side.

## Patentansprüche

1. Motorisierter Rollstuhl, umfassend:
eine Lenkwelle (29), die drehbar an einer Rollstuhlkarosserie bereitgestellt ist;
ein an der Lenkwelle befestigtes Lenkgriffstück (15);
Handgriffe (63, 64), die am Lenkgriffstück bereitgestellt sind und durch einen Rollstuhlbenutzer ergreifbar sind; und
Rückspiegel (23, 24), die vor den Handgriffen angeordnet sind und dazu verwendet werden, hinter den Rollstuhl zu schauen,
**dadurch gekennzeichnet, dass**
die Rückspielgel eine derartige Größe aufweisen, dass sie bezogen auf eine Frontansicht des Rollstuhls die Handgriffe vollständig abdecken, wenn der Rollstuhl geradeaus fährt, und dass er ferner Hinderniserfassungsmittel (49, 49) umfasst, die an der Rollstuhlkarosserie bereitgestellt sind zum Erfassen eines Hindernisses hinter dem Rollstuhl, und eine Steuer-/Regeleinrichtung (164), die mit den Hinderniserfassungsmitteln verbunden ist,
wobei jeder Rückspiegel mehrere Lichtstrahler (75a bis 75f, 76a bis 76f) aufweist, die in Im Wesentlichen horizontaler Richtung innerhalb eines für den Rollstuhlbenutzer sichtbaren Bereichs angeordnet sind, wobei die Steuer-/Regeleinrichtung (164) dafür eingerichtet ist,
Informationen über ein Rückwärtsbewegen des Rollstuhls und über ein Hindernis zu erhalten, das sich hinter dem Rollstuhl befindet und durch die Hinderniserfassungsmittel (49, 49) erfasst wurde, und
denjenigen der mehreren Lichtstrahler (75a bis 75f, 76a bis 76f) einzuschalten, welcher eine linke, mittige oder rechte Stellung des Hindernis hinter dem Rollstuhl repräsentiert,
wobei die durch eingeschaltete Lichtstrahler dargestellte Lichtanzeige an beiden Rückspiegeln (23, 24) die gleiche ist.

2. Motorisierter Rollstuhl nach Anspruch 1, wobei ein oberer Abschnitt der Lenkwelle auf der Seite des Lenkgriffstücks bezogen auf den Rollstuhl nach hinten geneigt ist und drehbar an der Rollstuhlkarosserie befestigt ist, und wobei die Rückspiegel karosserieseitig an einem feststehenden Abschnitt befestigt sind.

## Revendications

1. Fauteuil roulant motorisé comprenant :
un arbre de direction (29) prévu de manière rotative dans un corps de fauteuil roulant ;
un guidon de direction (15) fixé sur l'arbre de direction ;
des poignées (63, 64) qui sont prévues sur le guidon de direction et saisies par l'occupant du fauteuil roulant ; et
des rétroviseurs (23, 24) disposés en face des poignées et utilisés pour regarder derrière le fauteuil roulant, **caractérisé en ce que :**
les rétroviseurs ont une taille telle qu'ils recouvrent la totalité des poignées lorsqu'ils sont observés depuis l'avant du fauteuil roulant, lorsque le fauteuil roulant se déplace en ligne droite et **en ce qu'**il comprend en outre des moyens de détection d'obstacle (49, 49) qui sont prévus dans le corps de fauteuil roulant pour détecter un obstacle derrière le fauteuil roulant, et un contrôleur (164) qui est raccordé aux moyens de détection d'obstacle,
dans lequel chaque rétroviseur a une pluralité d'émetteurs de lumière (75a à 75f, 76a à 76f) disposés dans une direction sensiblement horizontale dans une plage visible par un occupant du fauteuil roulant, dans lequel le contrôleur (164) est adapté, pour obtenir l'information concernant le déplacement en marche arrière du fauteuil roulant et concernant un obstacle qui se trouve derrière le fauteuil roulant et qui est détecté par les moyens de détection d'obstacle (49, 49), et pour mettre en marche l'un quelconque de la pluralité d'émetteurs de lumière (75a à 75f, 76a à 76f) qui représente une position gauche ou centrale ou droite de l'obstacle derrière le fauteuil roulant,
dans lequel l'écran lumineux représenté en mettant en marche les émetteurs de lumière est le même sur les deux rétroviseurs (23, 24) ;

2. Fauteuil roulant motorisé selon la revendication 1, dans lequel une partie supérieure de l'arbre de direction du côté du guidon est inclinée vers l'arrière par rapport au fauteuil roulant et est fixée de manière pivotante sur le corps de fauteuil roulant, et les rétroviseurs sont fixés sur une partie fixe sur le côté du corps du fauteuil roulant.
